# FASCICULE DE BREVET EUROPEEN

(11) **EP 0 846 971 B1**
(45) Date de publication et mention de la délivrance du brevet: **09.05.2001**
(21) Numéro de dépôt: 97402884.7
(22) Date de dépôt: 01.12.1997
(51) Int. Cl.: G02B 6/44

(54) **Câble à fibres optiques renforcé, de structure unitube**
Verstärktes faseroptisches Kabel mit einer Einrohrstruktur
Reinforced fibre-optical cable with single tube structure

(30) Priorité: 09.12.1996 FR 9615085
(43) Date de publication de la demande: 10.06.1998
(73) Titulaire: ALCATEL, 75008 Paris (FR)
(72) Inventeur: Paborn, Jörgen, 51493 Ambjornarp (SE); Elisson, Peter, Hickory, NC 28601 (US)
(74) Mandataire: Buffière, Michelle

(56) Documents cités:
- EP-A- 0 361 863
- EP-A- 0 696 750
- DE-A- 3 309 996
- US-A- 4 896 940
- US-A- 5 013 127
- PATENT ABSTRACTS OF JAPAN vol. 012, no. 100 (P-683), 2 avril 1988 & JP 62 231915 A (SUMITOMO ELECTRIC IND LTD), 12 octobre 1987,

## Description

La présente invention porte sur un câble à fibres optiques renforcé, de structure unitube, qui comporte un tube de protection contenant les fibres optiques, des éléments de renfort autour du tube de protection et une gaine extérieure.

Un tel câble est notamment destiné à la transmission longue distance d'informations.

Le document EP-A-0696750 divulgue un câble de ce type, dont les fibres optiques indépendantes les unes des autres ou assemblées en au moins un ruban sont contenues dans un tube de protection en plastique, avec un matériau de remplissage de ce tube, dont les éléments de renfort sont réalisés en matériau plastique renforcé par des fibres de renfort et appelé matériau FRP et sont câblés sur le tube de protection en étant assemblés les uns aux autres, et dont la gaine extérieure est extrudée sur les éléments de renfort en place.

Pour la fabrication d'un tel câble, l'âme optique définie par le tube de protection contenant les fibres optiques et le matériau de remplissage est souvent réalisée initialement sur une première ligne de fabrication, tandis que les éléments de renfort sont réalisés et mis en place autour de l'âme optique et que simultanément la gaine extérieure est extrudée autour de l'âme optique, sur une deuxième ligne de fabrication du câble proprement dit. En effet, les différences entre les matériaux du tube de protection et de la gaine notamment font que des contraintes peuvent être engendrées lors du refroidissement de la gaine extrudée et sont alors transmises au tube de protection et susceptibles d'affecter les fibres contenues dans ce tube de protection. Il en résulte que la réalisation du câble se fait en deux étapes et est longue et qu'en conséquence le câble est de coût relativement élevé.

Le document US-A-5 013 127 divulgue un câble à fibres optiques renforcé, qui comporte des fibres optiques agencées en ensembles protégés individuellement, un premier tube en plastique contenant lesdits ensembles protégés, un deuxième tube métallique annelé entourant ledit premier tube, des éléments de renfort entre lesdits premier et deuxième tubes et un troisième tube en polyéthylène autour dudit deuxième tube.

Le document EP-A-0 361 863 divulgue également un câble optique renforcé, qui comporte des fibres optiques, un élément tubulaire autour desdites fibres pour le blocage d'eau, un tube extrudé contenant lesdites fibres et ledit élément tubulaire, un tube métallique annelé autour dudit tube extrudé et des éléments de renfort et une gaine extérieure autour dudit tube métallique.

Les câbles connus par ces deux derniers documents présentent des inconvénients semblables à ceux du câble connu par le premier des documents cités.

La présente invention a pour but un câble à fibres optiques dont la structure est simplifiée et permet la réalisation rapide et aisée du câble en une seule étape tout en évitant des contraintes susceptibles d'affecter les fibres optiques.

Elle a pour objet un câble à fibres optiques renforcé et de structure unitube, comportant des fibres optiques, un éventuel matériau de remplissage ainsi qu'un tube de protection situé directement autour dudit éventuel matériau et des fibres optiques, des éléments de renfort situés autour dudit tube de protection et une gaine extérieure, caractérisé en ce que ledit tube de protection est une structure tubulaire annelée.

Avantageusement, en outre :
- la structure tubulaire annelée est constituée par une bande métallique ondulée transversalement et déformée longitudinalement en tube ou est er matériau plastique et est extrudée ;
- les éléments de renfort comportent des cordes résistantes à la traction, noyées dans la gaine extérieure parallèlement à l'axe du câble, en étant diamétralement opposées deux à deux et à proximité d'un plan diamétral dudit câble, et/ou une couche de renfort entre ladite structure tubulaire annelée et ladite gaine extérieure.

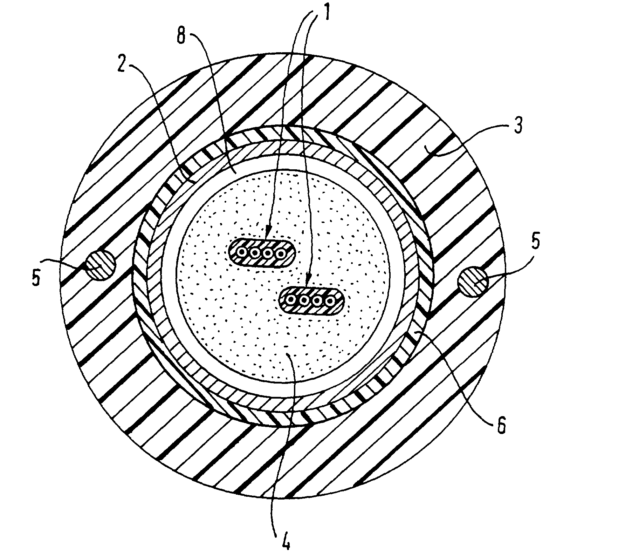

Les caractéristiques et avantages de l'invention ressortiront de la description faite ci-après d'un mode de réalisation donné à titre d'exemple préférentiel et illustré dans la figure unique du dessin ci-annexé.

Cette figure unique est une vue en coupe d'un câble selon l'invention. Le câble comporte des rubans 1 de fibres optiques, ou en variante des fibres optiques indépendantes les unes des autres, une structure tubulaire annelée 2 autour des rubans et une gaine extérieure 3 extrudée autour de la structure tubulaire 2. De préférence, l'espace intérieur dans lequel sont logés les rubans de fibres optiques contient un matériau de remplissage 4, servant notamment à protéger les fibres optiques contre la pénétration d'humidité. Ce matériau de remplissage est un matériau bloquant l'eau et s'opposant ainsi à sa pénétration, ou est un matériau gonflant en présense d'eau.

Dans le mode de réalisation représenté, le câble comporte des cordes ou tiges 5, relativement rigides de résistance élevée à la traction, qui sont noyées dans la gaine, parallèlement à l'axe du câble. Ces cordes sont par exemple en matériau plastique renforcé, ou en acier. Elles sont au nombre de deux dans la réalisation illustrée et alors opposées l'une à l'autre. Elles peuvent être en variante prévues au nombre de quatre notamment et être alors deux à deux symétriques par rapport à un plan diamétral du câble en étant à faible distance de ce plan.

Ce câble comporte avantageusement aussi une couche de renfort 6, entre la structure tubulaire 2 et la gaine extérieure 3. Cette couche de renfort peut être constituée par des fils ou éléments de résistance élevée à la traction, en aramide, fibres de verre ou matériau FRP par exemple, qui sont câblés hélicoïdalement autour de la structure tubulaire annelée 2. En variante, elle peut aussi être constituée par une couche annulaire extrudée autour de la structure tubulaire annelée en étant de préférence chargée de fibres de renfort.

Dans ce câble, la structure tubulaire annelée 2 est suffisamment résistante aux contraintes radiales pour servir simultanément au fur et à mesure de sa réalisation de support à la gaine extrudée et à l'éventuelle couche de renfort, sans risque pour les fibres optiques logées intérieurement. On a désigné par 8 l'ondulation non coupée, de la structure tubulaire annelée 2, située à l'arrière de son plan de coupe.

Cette structure tubulaire annelée est constituée à partir d'une bande métallique, qui est ondulée transversalement et pliée longitudinalement pour sa mise en forme de tube, au fur et à mesure de son avance en ligne. Elle peut en variante être en matière plastique et être directement extrudée en tube annelé autour des fibres. Au fur et à mesure de son avance en ligne, elle reçoit intérieurement les rubans de fibres optiques ou des fibres optiques et le matériau de remplissage et extérieurement l'éventuelle couche de renfort et la gaine extérieure extrudée munie de ses cordes de renfort. Le câble à fibres optiques résultant est de structure d'ensemble unitube et est ainsi obtenu directement en une seule étape, excluant la fabrication des rubans de fibres optiques lorsque ces dernières sont sous cette forme.

## Revendications

1. Câble à fibres optiques renforcé et de structure unitube, comportant des fibres optiques, un éventuel matériau de remplissage ainsi qu'un tube de protection situé directement autour dudit éventuel matériau et des fibres optiques, des éléments de renfort situés autour dudit tube de protection et une gaine extérieure, caractérisé en ce que ledit tube de protection est une structure tubulaire annelée (2).

2. Câble selon la revendication 1, caractérisé en ce que ladite structure tubulaire annelée (2) est constituée par une bande ondulée transversalement et pliée longitudinale- ment en forme de tube.

3. Câble selon la revendication 2, caractérisé en ce que ladite bande est métallique.

4. Câble selon la revendication 1, caractérisé en ce que ladite structure tubulaire annelée est en matériau plastique et est extrudée autour desdites fibres optiques.

5. Câble selon l'une des revendications 1 à 4, caractérisé en ce que lesdits éléments de renfort comportent des cordes de résistance élevée à la traction (5), noyées dans ladite gaine extérieure (3), parallèlement à l'axe dudit câble et diamétralement opposées deux à deux et à proximité d'un plan diamétral dudit câble.

6. Câble selon l'une des revendications 1 à 5, caractérisé en ce que lesdits éléments de renfort comportent une couche de renfort (6), entre ladite structure tubulaire annelée (2) et ladite gaine extérieure (3).

7. Câble selon la revendication 6, caractérisé en ce que ladite couche de renfort (6) comporte des éléments résistants à la traction câblés hélicoïdalement autour de ladite structure tubulaire annelée (2).

## Patentansprüche

1. Verstärktes Kabel mit optischen Fasern mit Einrohr-Struktur, mit optischen Fasern, einem eventuellen Füllmaterial sowie einem direkt um das eventuelle Füllmaterial und optische Fasern herum angeordneten Schutzrohr, um das Schutzrohr herum angeordneten Verstärkungselementen und einer äußeren Hülle, dadurch gekennzeichnet, daß das Schutzrohr eine Rohrstruktur mit Ringaufbau (2)ist.

2. Kabel nach Anspruch 1, dadurch gekennzeichnet, daß die Rohrstruktur mit Ringaufbau (2) durch einen transversal gewellten und longitudinal in Rohrform gebogenen Streifen gebildet ist.

3. Kabel nach Anspruch 2, dadurch gekennzeichnet, daß der Streifen aus Metall ist.

4. Kabel nach Anspruch 1, dadurch gekennzeichnet, daß die Rohrstruktur mit Ringaufbau aus Plastikmaterial ist und um die optischen Fasern herum extrudiert ist.

5. Kabel nach einem der Ansprüche 1 bis 4, dadurch gekennzeichnet, daß die Verstärkungselemente Schnüre mit hoher Zugfestigkeit (5) umfassen, die in die äußere Hülle (3) parallel zur Achse des Kabels eingelassen und einander paarweise diametral gegenüberliegend und in der Nähe einer diametralen Ebene des Kabels angeordnet sind.

6. Kabel nach einem der Ansprüche 1 bis 5, dadurch gekennzeichnet, daß die Verstärkungselemente eine Verstärkungsschicht (6) zwischen der Rohrstruktur mit Ringaufbau (2) und der äußeren Hülle (3) haben.

7. Kabel nach Anspruch 6, dadurch gekennzeichnet, daß die Verstärkungsschicht (6) schraubenlinienförmig um die Rohrstruktur mit Ringaufbau (2) verseilte zugfeste Elemente umfaßt.

## Claims

1. A reinforced optical fiber cable of unitube structure comprising optical fibers, an optional filler material and a protective tube situated directly around said optional material and the optical fibers, and reinforcing elements situated around said protective tube together with an outer sheath, the cable being characterized in that said protective tube is of corrugated tubular structure (2).

2. A cable according to claim 1, characterized in that said corrugated tubular structure (2) is constituted by a transversely corrugated strip that is rolled longitudinally to form a tube.

3. A cable according to claim 2, characterized in that said tube is made of metal.

4. A cable according to claim 1, characterized in that said corrugated tubular structure is made of a plastics material and is extruded around said optical fibers.

5. A cable according to any one of claims 1 to 4, characterized in that said reinforcing elements comprise cords (5) having high traction strength, embedded in said outer sheath (3) parallel to the axis of said cable and diametrally opposite in pairs and in the vicinity of a diametral plane of said cable.

6. A cable according to any one of claims 1 to 5, characterized in that said reinforcing elements comprise a reinforcing layer (6) between said corrugated tubular structure (2) and said outer sheath (3).

7. A cable according to claim 6, characterized in that said reinforcing layer (6) includes elements that are strong in traction wound helically around said corrugated tubular structure (2).
